(19) Europäisches Patentamt

European Patent Office

Office européen des brevets

(11) **EP 1 132 659 B1**

(12) **EUROPÄISCHE PATENTSCHRIFT**

(45) Veröffentlichungstag und Bekanntmachung des Hinweises auf die Patenterteilung:
**31.08.2005   Patentblatt 2005/35**

(51) Int Cl.7: **F16H 61/06**

(21) Anmeldenummer: **01105674.4**

(22) Anmeldetag: **07.03.2001**

(54) **Verfahren zum Steuern von Lastschaltungen eines Automatgetriebes**

Control method for automated powershift transmission

Système de commande pour transmission de changement de vitesse sous charge

(84) Benannte Vertragsstaaten:
**BE DE IT**

(30) Priorität: **08.03.2000   DE 10010815**

(43) Veröffentlichungstag der Anmeldung:
**12.09.2001   Patentblatt 2001/37**

(73) Patentinhaber: **ZF FRIEDRICHSHAFEN Aktiengesellschaft**
**88038 Friedrichshafen (DE)**

(72) Erfinder:
• **Burkhart, Hugo**
  **88213 Ravensburg (DE)**
• **Geis, Jörg**
  **88677 Markdorf (DE)**

(56) Entgegenhaltungen:
**EP-A- 0 588 627          WO-A-96/01961**
**DE-A- 19 756 844          DE-A- 19 804 630**
**US-A- 5 938 712**

**Beschreibung**

Die Erfindung betrifft ein Verfahren zum Steuern von Lastschaltungen eines Automatgetriebes nach der im Oberbegriff des Patentanspruches 1 näher definierten Art.

Aus der EP 0 770 195 B1 ist ein solches Verfahren zum Steuern eines von einer Brennkraftmaschine angetriebenen Automatgetriebes eines Kraftfahrzeuges bekannt, bei dem eine Schaltung von einem ersten in ein zweites Übersetzungsverhältnis erfolgt, indem eine erste Kupplung öffnet und eine zweite Kupplung schließt, wobei ein elektronisches Steuergerät über elektromagnetische Ventile den Druckverlauf der ersten und zweiten Kupplung während des Schaltvorganges steuert. Das elektronische Steuergerät bestimmt aufgrund von Eingangsgrößen eine erste oder zweite Schaltungsart, wobei die erste Schaltungsart eine Hochschaltung im Zug- bzw. eine Rückschaltung im Schubbetrieb ist und die zweite Schaltungsart eine Rückschaltung im Zug- bzw. eine Hochschaltung im Schubbetrieb ist. Die Schaltungsvorgänge in beiden Schaltungsarten werden derart ausgeführt, daß sich einer Schnellfüllphase eine Füllausgleichsphase anschließt und daran eine Lastübernahme- und schließphase folgt. In der ersten Schaltungsart folgt der Lastübernahmephase eine Gradient-Einstellphase mit Gleitphase, und vor der Schließphase kommt eine Gradient-Abbauphase. In der zweiten Schaltungsart folgt der Füllausgleichsphase eine Gradient-Einstellphase mit Gleitphase, und vor der Lastübernahmephase kommt eine Gradient-Abbauphase.

Damit wird ein dynamisches Verfahren bereitgestellt, mittels dem während der Schaltung die Auswahl und der Übergang von der ersten zur zweiten Kupplung automatisch und kontinuierliche erfolgen kann, wobei ein stetiger Verlauf des Abtriebsmomentes unter allen Fahrbedingungen angestrebt wird. Zum zuverlässigen und komfortablen Schalten der Kupplungen bei Lastschaltungen, d. h. Schaltungen ohne Zugkraftunterbrechung wird ein notwendiger Anpreßdruck der Kupplungen aus dem tatsächlichen Motormoment, dem dynamischen Moment und den Parametern der Schaltelemente berechnet. Den größten Druckanteil erhält man dabei unter hohen Lastzuständen aus dem Motormoment, während sich der Druck bei niedrigen Lastzuständen fast ausschließlich aus den getriebespezifischen Parametern errechnet. Das dynamische Moment, welches in der Lage ist, die Kupplungen in einer vorgegebenen Zeit zu synchronisieren, wird bei diesem Lastschaltverfahren aus einer parametrierten Kupplungsrutschzeit, einer zu überwindenden Drehzahldifferenz bzw. dem Gangsprung und dem Trägheitsmoment der zu beschleunigenden bzw. zu verzögernden Massen bestimmt. Dieses dynamische Moment wird zu einem statischen Moment bzw. Lastmoment addiert.

Als problematisch können sich dabei Toleranzen beim Ermitteln und Übertragen des Motormomentes sowie Toleranzen aufgrund unterschiedlicher Öle und andere getriebespezifische Toleranzen erweisen, wie z. B. die Toleranzen des Reibwerts von Reibelementen, der Kräfte von Kolbenrückstellfedern, der Reibung von Dichtelementen und von druckaufbauenden Elementen und deren Veränderung über der Betriebsdauer. Diese Getriebe- und Schaltgerätetoleranzen sowie Temperatur oder Ölviskosität beeinflussen die Gleitzeit bzw. Rutsch-zeit der Kupplungen und somit den Schaltkomfort und die Getriebelebensdauer.

Bei der aus der EP 0 770 195 B1 bekannten Lösung sind derartige Toleranzen pauschal in der Momentenberechnung berücksichtigt, wobei im Falle einer unzulässig langen Gleitzeit der Kupplung über eine vorgesehene Zeitstufe hinaus sogenannte Timeout-Schaltungen vorgesehen sind, welche vom Fahrzeuginsassen aufgrund ihrer Ruckartigkeit als unangenehm empfunden werden können.

Es ist daher Aufgabe der vorliegenden Erfindung, das Verfahren zur Steuerung von Lastschaltungen eines Automatgetriebes gemäß der eingangs genannten Art im Hinblick auf einen noch besseren Schaltkomfort dahingehend zu verbessern, daß sich aus Serienstreuung und Alterung ergebende Getriebe- und Schaltgerätetoleranzen berücksichtigt werden.

Erfindungsgemäß wird diese Aufgabe mit den Verfahrensmerkmalen gemäß dem Patentanspruch 1 gelöst. Mit der erfindungsgemäßen Regelung und der Hinzuaddierung eines zusätzlichen aus der Regelung gewonnenen Momentes zu dem durch Steuerung vorgegebenen statischen Motormoment und dynamischen Motormoment werden bauteilspezifische Toleranzen von der Elektronik des Automatgetriebes selbst erkannt, wodurch die Gleitzeit der Kupplungen so eingestellt werden kann, daß eine theoretische Soll-Gleitzeit weder überschritten noch unterschritten wird. Damit ergibt sich ein stetiger Abtriebsmomentenverlauf, welcher einen optimalen Schalt- und Fahrkomfort ermöglicht.

In einer besonders vorteilhaften Ausführung der Erfindung kann vorgesehen sein, daß eine Adaption der Druckansteuerung der Kupplungen vorgenommen wird, mit der in vorteilhafter Weise Toleranzen, Streuungen und niederfrequente Änderungen von Kupplungsreibwerten und anderen die Schaltqualität beeinflussenden Parametern langfristig ausgeglichen werden können und der Reglereingriff in nachfolgenden Schaltungen im gleichen Betriebszustand wieder abnimmt.

Weitere Vorteile und vorteilhafte Ausführungen der Erfindung ergeben sich aus den Patentansprüchen und aus dem nachfolgend anhand der Zeichnung prinzipmäßig beschriebenen Ausführungsbeispiel.
Es zeigt:

Fig. 1    ein Zeitdiagramm einer Schaltung der ersten Schaltungsart;

Fig.2    ein die Berechnung eines Kupplungsdrucks pK wiedergebendes Blockdiagramm;

Fig.3    ein Blockschaltbild einer erfindungsgemäßen Regelung;

Fig.4    ein Blockbild eines Sollwertmanagements für die Regelung gemäß Fig. 3;

Fig.5    ein Blockbild einer Adaption und

Fig.6    ein Blockbild einer Lastklassenbestimmung für die Adaption gemäß Fig. 5.

Die Figuren beschreiben ein Verfahren zum Steuern von Lastschaltungen eines Automatgetriebes eines Kraftfahrzeuges, bei dem ein elektronisches Steuergerät herkömmlicher Art über an sich bekannte elektrohydraulische Einrichtungen den Druckverlauf einer ersten, öffnenden Kupplung K1 und einer zweiten, schließenden Kupplung K2 während eines Schaltvorganges derart steuert, daß in einer ersten Schaltungsart, welche eine Zug-Hochschaltung bzw. eine Schub-Rückschaltung ist, und in einer zweiten Schaltungsart, welche eine Zug-Rückschaltung bzw. eine Zug-Hochschaltung ist, jeweils auf eine Schnellfüllphase 1 eine Füllausgleichsphase 2 folgt, an die sich eine Lastübernahmephase 3 und eine Schließphase 7 anschließt.

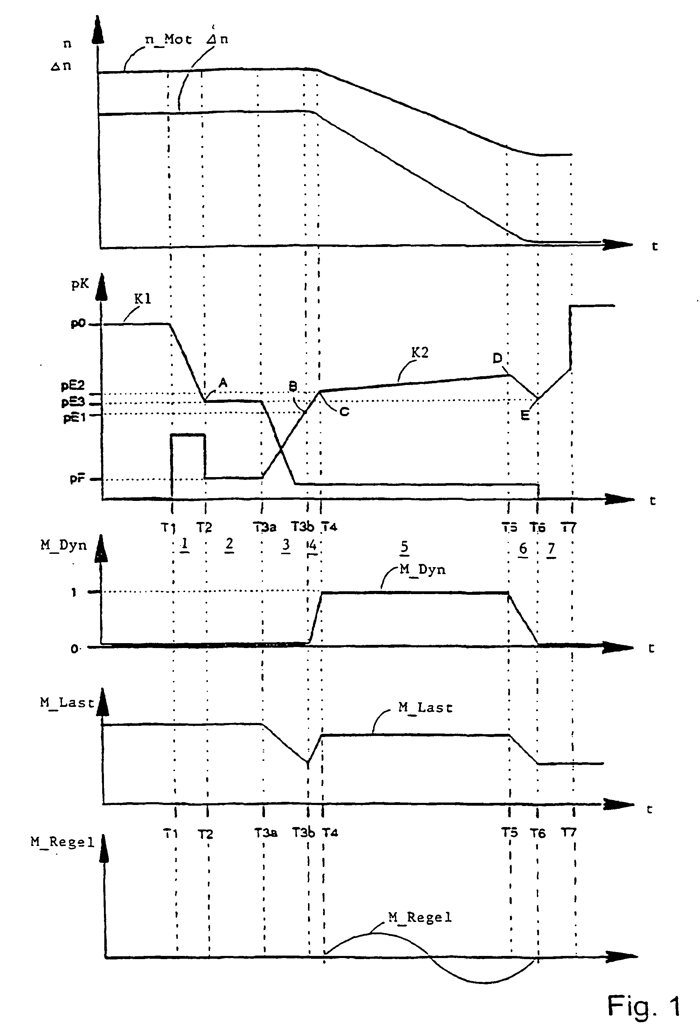

In der ersten Schaltungsart, welche schematisch in Fig. 1 dargestellt ist, folgt der Lastübernahmephase 3 eine Gradient-Einstellphase 4 mit einer Gleitphase 5, und vor der Schließphase 7 kommt eine Gradient-Abbauphase 6. In der zweiten nicht explizit dargestellten Schaltungsart folgt der Füllausgleichsphase 2 die Gradient-Einstellphase 4 mit der Gleitphase 5 und vor einer Lastübernahmephase erfolgt die Gradient-Abbauphase 6. Der notwendige Druck pK der Kupplungen K1 und K2 berechnet sich dabei jeweils aus einem statischen Motormoment M_Last, welche eine Funktion eines aktuellen, von der Brennkraftmaschine abgegebenen Moments M_Mot mal einem Wandlungsverhältnis $\mu$ eines in dem Automatgetriebe vorhandenen hydrodynamischen Drehmomentwandlers ist, einem dynamischen Moment M_Dyn und getriebespezifischen Parametern der Schaltelemente bzw. Kupplungen K1 und K2.

Des weiteren ist in Fig. 1 lediglich schematisch der Verlauf eines eine Regelgröße darstellenden Momenttes M_Regel wiedergegeben, dessen Wert in einer die Getriebe- und Schaltgerätetoleranzen erfassenden Regelung derart bestimmt wird, daß eine Sollgleitzeit der Kupplungen K1 und K2 wenigstens annähernd eingehalten wird.

Betrachtet man in Fig. 1 den Druckverlauf über der Zeit für die erste Kupplung K1 und die zweite Kupplung K2 und einen aus diesen Druckverläufen resultierenden Drehzahlverlauf n_mot einer Brennkraftmaschine sowie einen Differenzdrehzahlverlauf $\Delta$n der zweiten Kupplung K2 über der Zeit, ist der Ablauf der verschiedenen Phasen 1, 2, 3, 4, 5, 6 und 7 der Schaltung und der jeweilige Übergang von einer Phase in die andere, welcher abhängig ist vom Auftreten definierter Ereignisse bzw. Bedingungen und nachfolgend Transition genannt wird, wiedergegeben.

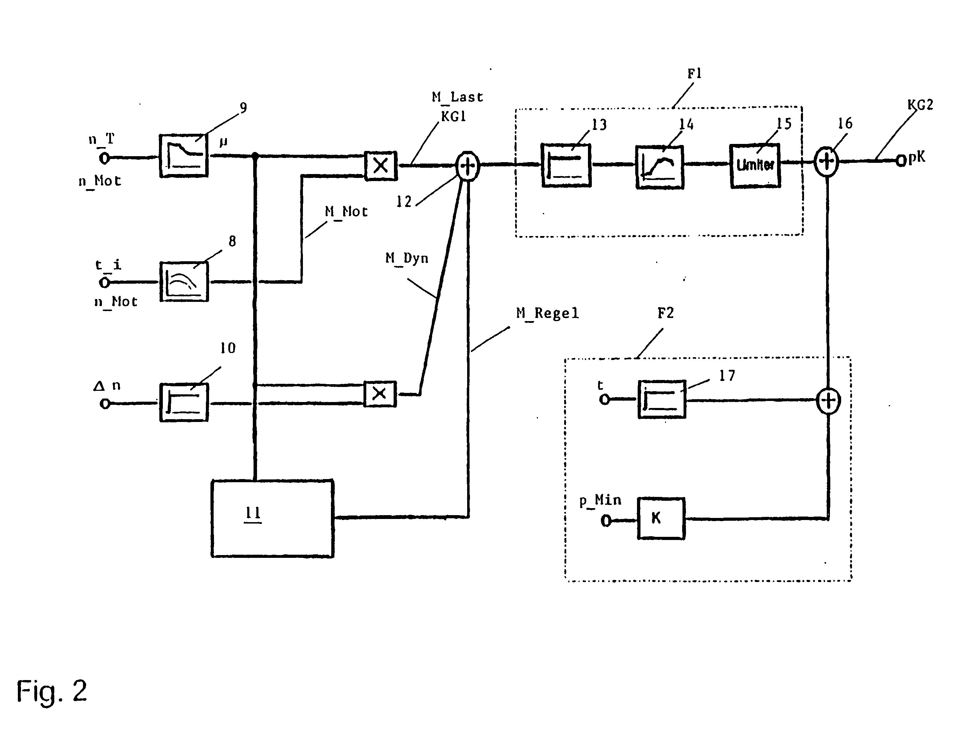

Für eine Schaltung der ersten Schaltungsart, d. h. eine Hochschaltung im Zugbetrieb oder Rückschaltung im Schubbetrieb, welche vorliegend exemplarisch beschrieben ist, ergibt sich nachfolgend beschriebener Schaltungsablauf. Bei einer Transition T1 gibt ein elektronisches Steuergerät den Schaltbefehl aus. Gleichzeitig wird der Druck der ersten Kupplung K1 von einem Anfangswert p0 auf einen Druckwert A reduziert, wobei dieses Druckniveau oberhalb der Rutschgrenze der ersten Kupplung K1 liegt. Ebenfalls bei der Transition T1 wird die zweite Kupplung K2 in der Schnellfüllphase 1 mit hohem Schnellfülldruck beaufschlagt. Bei einer Transition T2, bei der eine Zeitstufe für die Schnellfüllphase 1 abgelaufen ist, beginnt für die zweite Kupplung K2 die Füllausgleichsphase 2, bis eine Transition T3a erfüllt ist, bei der geprüft wird, ob eine Zeitstufe, die die Dauer des Füllausgleiches steuert, abgelaufen ist. Während der Füllausgleichsphase 2, bei der ein Fülldruck p_F herrscht, wird die zweite Kupplung K2 mit Druckmedium befüllt, wobei sie jedoch noch kein Moment überträgt. Das Druckniveau der ersten Kupplung K1 bleibt während der Füllausgleichsphase 2 der zweiten Kupplung K2 konstant. Wenn bei der Transition T3a erkannt wird, daß die Zeitstufe für den Füllausgleich abgelaufen ist, beginnt für die zweite Kupplung K2 die Lastübernahmephase 3, welche endet, wenn der Druck pK in der zweiten Kupplung K2 das höhere Druckniveau B bei einem Druckendwert pE1 erreicht hat. Das Druckniveau des Punktes B wird dabei so gewählt, daß die zweite Kupplung K2 ein statisches Moment, vorliegend das Lastmoment M_Last, übertragen kann. Das statische Moment, das von der Brennkraftmaschine aktuell abgegeben wird, kann direkt erfaßt oder aus der Drehzahl n_Mot der Brennkraftmaschine und einer Einspritzzeit bzw. Stellung einer Drosselklappe berechnet werden. Am Punkt B tritt noch keine Veränderung der Drehzahl n_Mot der Brennkraftmaschine bzw. der Differenzdrehzahl $\Delta$n der zweiten Kupplung K2 auf. Der Endwert pE1 des Druckes der Lastübernahmephase 3 ist hier in Abhängigkeit einer ersten Kenngröße KG1 gewählt, welche sich aus dem statischen Moment M_Last ergibt und deren Ermittlung bezüglich Fig. 2 erläutert wird.

Während der Lastübernahmephase 3 wird der Druck der ersten Kupplung K1 von dem Druckniveau A auf einen Haltedruck reduziert. Bei einer Transition T3b wird geprüft, ob das Moment der zweiten Kupplung K2 dem statischen Moment M_Last entspricht. Danach wird der Druck erhöht bis auf ein Druckniveau C mit einem Druckendwert pE2, welcher in Abhängigkeit einer zweiten Kenngröße KG2 gewählt wird, welche das dynamische Moment M_Dyn und das zusätzliche Moment M_Regel aus der Regelung enthält. Zur Berechnung der zweiten Kenngröße KG2 wird auf die später beschriebene Fig. 2 verwiesen.

Das dynamische Moment M_Dyn ist eine Funktion einer Soll-Schaltzeit, einer getriebeeingangsseitig bezogenen Schwungmasse bzw. Massenträgheitsmoment des Motors und der Differenzdrehzahl Δn. Die Differenzdrehzahl Δn ergibt sich aus dem Verhältnis der ersten und zweiten Übersetzung mal der Getriebeausgangsdrehzahl. Über die Druckdifferenz zwischen den Druckendwerten pE1 und pE2 wird der Gradient der Drehzahl n_Mot der Brennkraftmaschine bzw. der Gradient der Differenzdrehzahl Δn der zweiten Kupplung K2 gesteuert. Wie aus dem Verlauf des dynamischen Moments M_Dyn ersichtlich ist, erhöht sich dieses gleichzeitig von seinem Anfangswert 0 auf den Endwert 1, welcher einem Wert von 100 % entspricht.

Bei einer Transition T4 wird geprüft, ob eine Zeitstufe abgelaufen ist und sodann die Gleitphase 5 für die zweite Kupplung K2 bis zu einer Transition T5 gestartet. Während der Gleitphase 5 wird der Druck der zweiten Kupplung K2 linear erhöht, wobei die Belastung der Kupplung reduziert werden kann, indem das von der Brennkraftmaschine abgegebene Moment verringert wird. Wenn bei der Transition T5 ein Vorsynchronpunkt erkannt wird, welcher sich aus einem Gradient der Differenzdrehzahl Δn der zweiten Kupplung K2, dem aktuellen Wert der Differenzdrehzahl Δn der zweiten Kupplung K2 und einer Zeitstufe bestimmt, über die z. B. Verzögerungszeiten der Hydraulik mitberücksichtigt werden, wird der Druck der zweiten Kupplung K2 in einem Punkt D auf einen neuen Druckwert des Punktes E mit einem Druckendwert pE3 reduziert. Dabei verändert sich der Gradient der Drehzahl n_Mot der Brennkraftmaschine und die Differenzdrehzahl Δn der zweiten Kupplung K2 derart, daß beide in einen annähernd waagrechten Verlauf übergehen, was einen weichen und ruckfreien Übergang am Synchronpunkt des zweiten Übersetzungsverhältnisses bedeutet.

In dieser Gradient-Abbauphase 6 ist der Druckendwert pE3 eine Funktion einer dritten Kenngröße KG3, welche durch eine zweite Zeitstufe für den Übergang vom Gradienten der Differenzdrehzahl Δn am Vorsynchronpunkt zum Gradienten der Differenzdrehzahl Δn am Synchronpunkt festgelegt ist. Während dieser Phase wird das zuvor aufgebaute dynamische Moment M_Dyn wieder abgebaut. Bei einer Transition T6b wird geprüft, ob der Druck aus dem dynamischen Moment M_Dyn abgebaut bzw. ob die Synchrondrehzahl erreicht ist. Wenn dies erkannt wird, beginnt die Schließphase 7, während der der Druck an der zweiten Kupplung K2 rampenförmig erhöht wird, bis der Absolutwert der Differenzdrehzahl Δn der zweiten Kupplung K2 innerhalb einer dritten Zeitstufe kleiner einem Sollwert ist. Ist diese Bedingung erfüllt, so wird die zweite Kupplung K2 mit Hauptdruck beaufschlagt. Bei einer Transition T7 wird geprüft, ob ein Haften der zweiten Kupplung K2 erkannt ist, und wenn dies gegeben ist, wird erneut zur Transition T1 gegangen.

Die vorgesehenen Zeitstufen dienen bei dem beschriebenen Verfahren der zusätzlichen Absicherung der Rutschzeit der Kupplungen, um gegebenenfalls bei einem Ausfall der erfindungsgemäßen Regelung sogenannte Timeout-Schaltungen zu ermöglichen und damit unzulässig lange oder zu kurze Rutschzeiten zu vermeiden.

In der zweiten Schaltungsart, welche in der Zeichnung nicht eigens wiedergegeben ist, wird während der Schnellfüllphase 1 die zweite Kupplung K2 mit hohem Schnellfülldruck beaufschlagt und der Druck der ersten Kupplung K1 von einem ersten auf ein zweites Niveau abgesenkt wird, welches oberhalb der Rutschgrenze der ersten Kupplung K1 liegt. In der Füllausgleichsphase 2 wird die zweite Kupplung K2 auf einem niederen Druckniveau pF befüllt, wobei der Druck der ersten Kupplung K1 auf dem zweiten Niveau verbleibt. In der Gradient-Einstellphase 4 wird der Druck der ersten Kupplung K1 auf einen von der zweiten Kenngröße KG2 abhängigen Endwert verringert, während er in der Gleitphase 5 rampenförmig erhöht wird, bis der Vorsynchronpunkt erkannt wird. In der Gradient-Abbauphase 6 wird der Druck der ersten Kupplung K1 vom Rampenendwert auf einen von der ersten Kenngröße KG1 abhängigen Endwert erhöht, von dem aus er in der Lastübernahmephase auf Null reduziert wird, während der Druck der zweiten Kupplung K2 von Fülldruck pF auf den von der ersten Kenngröße KG1 abhängigen Endwert erhöht wird. Mit Erreichen dieses Endwertes wird dann die Schließphase 7 gestartet.

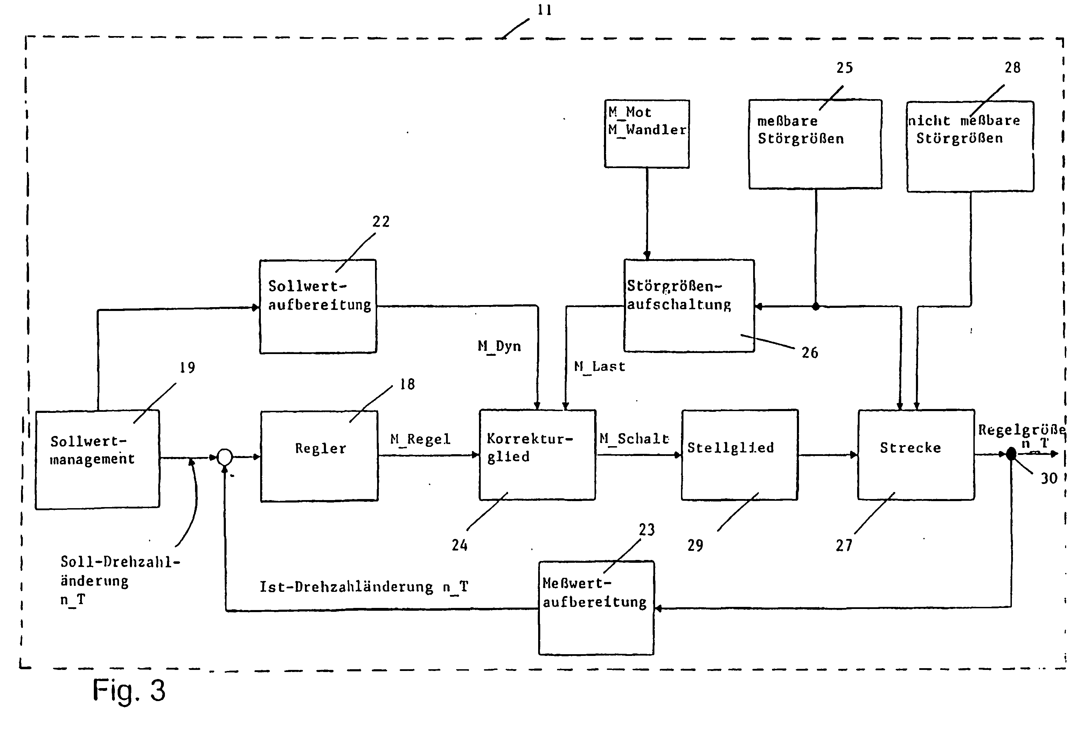

In der Fig. 2 ist die Berechnung des Kupplungsdrukkes pK für jede Kupplung K1 und K2 grafisch näher dargestellt. Der Kupplungsdruck pK berechnet sich dabei jeweils aus der ersten Kenngröße KG1, welche dem statischen Moment M_Last entspricht, dem dynamischen Moment M_Dyn, dem sich aus einer bezüglich Fig. 3 näher beschriebenen Regelung ergebenden zusätzlichen Moment M_Regel, einem Faktor F1 und einer Konstanten F2. Das statische Moment M_Last kann aus dem von der Brennkraftmaschine aktuell abgegebenen Motormoment M_Mot und dem Wandlungsverhältnis μ berechnet werden, wobei das aktuelle Motormoment M_Mot aus einer Einspritzzeit t_i und der Drehzahl n_Mot der Brennkraftmaschine über ein Motorkennfeld 8 berechnet werden kann. Daneben kann das Motormoment M_Mot jedoch auch als echter Wert vorliegen. Das Wandlerverhältnis μ wird vorliegend in einem Funktionsblock 9 aus einem Drehzahlverhältnis von Drehzahl n_Mot der Brennkraftmaschine zur Drehzahl n_T einer Turbinenwelle berechnet. Falls in einer anderen Ausführung des erfindungsgemäßen Verfahrens bei einem Automatgetriebe kein hydrodynamischer Wandler verwendet wird, wird das Wandlungsverhältnis mit 1 festgelegt.

Das dynamische Moment M_Dyn berechnet sich aus der Schwungmasse μ, multipliziert mit der Ausgangsgröße eines Kennfeldes 10, welches eine Sollschaltzeit, eine getriebeeingangsseitig bezogene Schwungmasse und eine Differenzdrehzahl beinhaltet. Die Differenzdrehzahl Δn wiederum entspricht dem Verhältnis der ersten und zweiten Übersetzung multipliziert mit der Getriebeausgangsdrehzahl.

Das zusätzliche Moment M_Regel berechnet sich auf nachfolgend genauer beschriebene Art und Weise in einer Regelung 11 und wird vorzeichenrichtig in einem Summationspunkt 12 zu dem statischen Moment M_Last und dem dynamischen Moment M_Dyn addiert.

Die Summe der Momente wird über den Faktor F1, welcher Korrekturlinien 13 für einen momentenabhängigen Reibwert, Korrekturlinien 14 für eine Schaltelementkonstante und einen Begrenzer 15 enthält, gewichtet. Die Ausgangsgröße des Faktors F1 ist ein Druckwert, welcher mit einem weiteren Druckwert der konstanten F2 in einem Summationspunkt 16 addiert wird, wobei sich die Konstante F2 aus einer Mindestdruckvorgabe p_Min und zeitabhängigen Druckanteilen in Form von zeitgesteuerten Rampen 17 zur Absenkung der Turbinendrehzahl zusammensetzt. Die Ausgangsgröße des Summationspunktes 16 ist der Kupplungsdruck pK für die jeweilige Kupplung K1 oder K2 und entspricht der zweiten Kenngröße KG2.

Die Fig. 3 zeigt schematisch die Regelung 11, aus der sich das zusätzliche Moment M_Regel ergibt. Wie darin ersichtlich ist, wird an einem Regler 18 zur Ermittlung des zusätzlichen Moments M_Regel eine Ist-Drehzahländerung einer Getriebeeingangsdrehzahl n_T während einer Schaltung mit einer Soll-Drehzahländerung der Getriebeeingangsdrehzahl n_T verglichen, wobei das zusätzlich aufgrund der Regelung 11 aufzubringende Moment M_Regel derart errechnet wird, daß die Differenz zwischen Soll- und Ist-Drehzahländerung der Getriebeeingangsdrehzahl n_T zu Null wird.

Das zusätzlich aufzuschlagende Regelmoment M_Regel sorgt dafür, daß die Geschwindigkeit des Drehzahlabbaus eingehalten wird, d. h. die Regelung hält somit nicht die Gleitzeit der Kupplung, sondern die Geschwindigkeit des Drehzahlabbaus konstant, wobei sich aus einer konstanten Getriebeeingangsdrehzahländerung der Vorteil eines stetigen Abtriebsmomentenverlaufes mit höchstem Schaltkomfort ergibt. Des weiteren ist die Sollgröße bei Heranziehung der Änderung der Turbinendrehzahl auf den Getriebeeingang bezogen, wodurch sich in vorteilhafter Weise vergleichbare Bezugsgrößen und ein geringer Abstimmaufwand ergeben, da ein Satz Reglerparameter für alle Schaltungen, d. h. für alle Schaltelemente und alle Lastfälle, gültig ist.

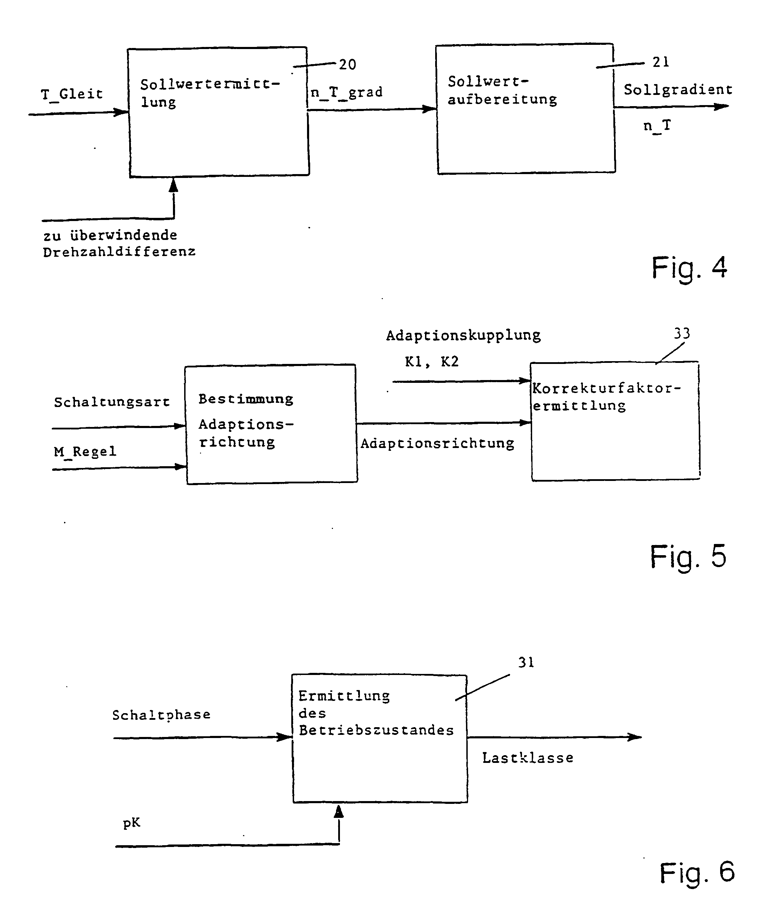

Die Soll-Drehzahländerung der Getriebeeingangsdrehzahl n_T wird in einem in Fig. 3 symbolisch dargestellten Sollwertmanagement 19 ermittelt, welches in Fig. 4 näher ausgeführt ist.

Insbesondere Bezug nehmend auf Fig. 4 ist ersichtlich, daß das Sollwertmanagement 19 auf Basis des oben beschriebenen Modells des Lastschaltverfahrens in einer Sollwertermittlung 20 aus der zu überwindenden Drehzahldifferenz, welche dem gewünschten Gangsprung entspricht, und der vorgegebenen parametrierten Gleitzeit T_Gleit der Kupplung eine Soll-Drehzahländerung n_T_grad der Getriebeeingangsdrehzahl n_T ermittelt, welche einen konstanten Gradienten darstellt, der den Quotienten der zu überwindenden Drehzahldifferenz bezogen auf die Gleitzeit T_Gleit bzw. den Quotienten des momentan aufzuschaltenden dynamischen Moments M_Dyn auf das zur Berechnung des dynamischen Moments M_Dyn benutzte Massenträgheitsmoment wiedergibt. Dieser Sollwert wird in Abhängigkeit bestimmter Parameter, wie z. B. Filterzeiten, in einer nachgeschalteten Sollwertaufbereitung 21 bearbeitet, deren Ausgangsgröße die Soll-Drehzahländerung der Getriebeeingangsdrehzahl n_T ist.

Bei der Ausführung nach Fig. 3 ist zur Kompensation einer hydraulischen Verzögerung des Stellsystems und einer Filterung eine Sollwertaufschaltung 22 vorgesehen, welche bestimmt, wann der Sollwert ausgegeben wird. Vorzugsweise wird darin der gewünschte Sollwert bei aktivierter Regelung über zwei hintereinander geschaltete PT1-Glieder verzögert, um die hydraulische Verzögerung und die Filterung nachzubilden.

Wie bereits bezüglich Fig. 1 beschrieben wurde, beginnt die Aufschaltung des Sollwerts mit Beginn der Gleitphase 5 und endet am Ende der Gradient-Abbauphase 6. In den folgenden Schaltphasen bleibt der Sollwert und das zusätzliche geregelte Moment M_Regel konstant. Dabei wird zu Beginn der Gleitphase 5 die Filterung auf die aktuelle Getriebeeingangsdrehzahl n_T initialisiert.

Betrachtet man die Ermittlung der Ist-Drehzahländerung der Getriebeeingangsdrehzahl n_T, so entspricht dieser Istwert, welcher in einer Meßwertaufbereitung 23 bereitgestellt wird, der numerischen Differentiation der gemessenen Getriebeeingangsdrehzahl n_T, die gefiltert wird, wobei die Initialisierung des Filters wiederum zu Beginn der Gleitphase 5 auf die aktuelle Getriebeeingangsdrehzahl n_T erfolgt.

Die Bestimmung des Istwertes der Getriebeeingangsdrehzahl n_T beginnt ebenfalls in der Gleitphase 5 und endet mit dem Verlassen der Gradient-Abbauphase 6. In allen anderen Phasen wird der Istwert auf den Wert Null gesetzt. Die Ist-Drehzahländerung der Getriebeeingangsdrehzahl n_T ermittelt sich aus der Getriebeeingangsdrehzahländerung und der Abtriebsdrehzahländerung, welche während der Regelung 11 berücksichtigt wird. Damit zum Beginn der Regelung 11 kein Sprung bei der Berücksichtigung der Abtriebsdrehzahländerung auftritt, kann es vorzugsweise vorgesehen sein, daß die elektronische Getriebesteuerung die Abtriebsdrehzahländerung wie bei der Sollwertberechnung über ein PT1-Glied filtert. Die Ist-Drehzahländerung ergibt sich dabei nach Subtraktion einer Istdrehzahländerungskorrektur, die sich aus dem Produkt der Abtriebsdrehzahl mal der aktuellen Übersetzung berechnet.

Die Ausgangsgröße des Reglers 18 ist das zusätzliche Regelmoment M_Regel, welches sich als Produkt eines Regelgradienten bzw. Korrekturgradienten zum Angleich von Soll-Drehzahländerung und Ist-Drehzahländerung der Getriebeeingangsdrehzahl n_T multipliziert mit dem getriebeeingangsseitigen Massenträgheitsmoment, d. h. die zu beschleunigende bzw. zu verzögernde getriebeeingangsseitige Schwungmasse beispielsweise des Motors, darstellt. Dieses zusätzliche Moment M_Regel der Regelung 11 wird als geregelter Anteil eines Schaltmomentes M_Schalt dem gesteuerten Moment aus dem statischen Moment M_Last und dem dynamischen Moment M_Dyn hinzuaddiert, wobei hierfür in Fig. 3 ein Korrekturglied 24 vorgesehen ist, welches den Summationspunkt 12 der Fig. 2 beinhaltet. In dieses Korrekturglied 24 gehen in Form des statischen Momentes M_Last auch das aktuelle, sich aus einem Motorkennfeld ergebende Motormoment M_Mot, das aktuelle Wandlermoment M_Wandler sowie meßbare Störgrößen aus einem Funktionsblock 25, welcher z. B. die Motordrehzahl oder eine Lastgeberstellung enthalten kann und über eine Störgrößenaufschaltung 26 zugeschaltet werden kann, ein. Die meßbaren Störgrößen aus dem Funktionsblock 25 wirken sich auch auf eine Regelstrecke 27 aus, welche vorliegend das Automatgetriebe darstellt. Eine Eingangsgröße der Regelstrecke 27 ist der von einem Stellglied 29, z. B. einem Proportionalventil, aufgrund des von dem Korrekturglied 24 ausgegebenen Schaltmomentes M_Schalt eingestellte Kupplungsdruck pK. Des weiteren gehen in die Regelstrecke 27 nicht meßbare Störgrößen ein, welche in einem Modul 28 ermittelt werden, wie z. B. eine Fahrwiderstandsänderung.

Ausgangsgröße der Regelstrecke 27 ist die Getriebeeingangsdrehzahl n_T als Regelgröße, welche an einem Punkt 30 abgegriffen wird und der Meßwertaufbereitung 23 zugeführt wird. Das Schaltmoment M_Schalt entspricht damit der Summe des statischen Moments M_Last, des dynamischen Moments M_Dyn und des geregelten zusätzlichen Moments M_Regel.

Die Summe von P-, D-, DT1- und I-Anteil am Reglerausgang ergibt das zusätzliche Moment M_Regel, wobei der Regelanteil am Moment wenn notwendig aufgrund des Vorzeichens der Summe der Momente auch zur Zug-/Schub-Unterscheidung beiträgt und auch einen Wechsel zwischen Zugbetrieb und Schubbetrieb auslösen kann.

Am Ende der Gradient-Abbauphase 6 wird das aus der Regelung 11 erhaltene Moment M_Regel eingefroren.

Das beschriebene Verfahren ist sehr flexibel hinsichtlich der Änderung der Trägheitsmomente, z. B. bei Ankoppelung einer Wandlerüberbrückungskupplung, da es so vorgesehen ist, daß der Regelkreis an Änderungen des zur Berechnung des zusätzlichen Moments M_Regel verwendeten Massenträgheitsmomentes angepaßt wird. So wird einer Erhöhung des Massenträgheitsmoments in Form einer Verstärkung des Regelkreises Rechnung getragen. Auf diese Weise ist gewährleistet, daß immer der korrekte Reglerverstärkungsfaktor berücksichtigt ist.

Die beschriebene Regelung wird grundsätzlich bei allen Schaltungsarten, d. h. Zug-Hochschaltungen, Zug-Rückschaltungen, Schub-Hochschaltungen und Schub-Rückschaltungen zugeschaltet, wobei die Regelung sinnvollerweise jedoch nur in einer Phase der Kupplungen zugeschaltet ist, in denen die Betätigung der Schaltelemente bzw. Kupplungen K1, K2 eine direkte und meßbare Auswirkung auf den Schaltverlauf hat. Somit sind dies die Phasen, in denen die Kupplungen K1, K2 gleiten, d. h. vorliegend die Gleitphase 5 und die Gradient-Abbauphase 6 der Kupplungen K1 und K2.

In der vorliegenden, besonders bevorzugten Ausführung des erfindungsgemäßen Verfahrens werden die während der Regelung 11 gewonnenen Daten einer Adaption zugeführt, so daß der Anteil des zusätzlichen Momentes M_Regel aufgrund der Regelung 11 in nachfolgenden Schaltungen im gleichen Betriebszustand abnimmt.

Mit einer adaptiven Drucksteuerung können Toleranzen, Streuungen und niederfrequente Änderungen von Kupplungsreibwerten und anderen die Schaltqualität beeinflussenden Parametern langfristig ausgeglichen werden. Hierzu wird der gesteuerte Anteil M_Regel des Schaltmomentes M_Schalt in der Adaption so eingestellt, daß die Lastschaltung innerhalb gewisser Toleranzen abläuft und der Regler möglichst wenig eingreifen muß.

Die Fig. 5 und Fig. 6 zeigen eine Gleitzeit-Adaption, bei der in Abhängigkeit des ermittelten zusätzlichen Momentes M_Regel aus der Regelung 11 und des Druckes pK der Kupplungen K1, K2 während der Schaltung ermittelt wird, ob Reibwerttoleranzen z. B. der Reibelemente oder Toleranzen von Federkräften, der Reibung der Dichtelemente oder der druckaufbauenden Elemente ausgeglichen werden sollen.

Die Adaption basiert auf dem Vorgehen der Getriebeabstimmung. So korrigiert die Adaption über eine Kupplungskonstante einen Moment-Druck-Zusammenhang zwischen Kupplungsdruck pK und dem Schaltmoment M_Schalt, wobei die Kupplungskonstante in Abhängigkeit von Reibgrößen vorgegeben wird und multipliziert mit dem Schaltmoment M_Schalt und einem Momentenfaktor einen Summanden ergibt, der in Addition mit einem Offsetdruck den Kupplungsdruck pK bildet.

Das heißt beispielsweise, ändert sich das Öl und somit der Reibwert, korrigiert die Adaption, wobei gewährleistet ist, daß die Adaption bei der Vielzahl von möglichen Schaltungen schnellstmöglich den Reibwert korrigiert, da der Moment-Druck-Zusammenhang für alle Schaltungen gleich ist.

Die Adaptionsgröße wird in Abhängigkeit einer Lastklasse der Schaltung gewählt. So wird bei niedriger Lastklasse eine Offsetdruckadaption, welche Toleranzen z. B. von Federkräften, Dichtelementen, Druckreglern und Verstärkungsventilen berücksichtigt, und bei hoher Lastklasse eine Adaption des Reibwertes und der Bestimmung des Getriebeeingangsmoments durchgeführt.

Wie insbesondere in Fig. 6 vereinfacht dargestellt ist, wird die Lastklasse in einem Modul 31 zur Ermittlung des Belastungszustandes aus der aktuellen Schaltphase und des Kupplungsdruckes pK ermittelt.

Die mittlere Regelabweichung ergibt sich aus dem eingestellten Druck pK der Kupplung K1 bzw. K2, wobei sich der Druck pK aus dem eingestellten Schaltmoment M_Schalt wie folgt ergibt:

$$pK = M\_Schalt * Momentenfaktor * Kupplungskonstante$$

$$+ Offsetdruck$$

Daraus wird deutlich, daß der Momentenfaktor bei hohem Moment M_Schalt den größeren Einfluß hat, während bei kleinem Moment M_Schalt der Offsetdruck dominiert. Daher führt die elektronische Getriebesteuerung bei niedrigen Lastklassen eine Offsetdruckadaption (additiv) und bei hohen Lastklassen eine Adaption des Momentenfaktors (multiplikativ) durch.

Die Lastklassen sind empirisch so bestimmt, daß sich der Ursachen-Wirkungszusammenhang trennen läßt. In der niedrigen Lastklassen, d. h. niedrigem Druck pK bzw. kleinem Moment M_Schalt, dominieren die Auswirkungen der Toleranzen der Federkräfte, der Dichtelemente, der Druckregler und Verstärkungsventile. Bei hohen Lastklassen, d. h. hohem Druck pK bzw. großem Moment M_Schalt ist der Einfluß des Reibwertes dominant. In der mittleren Lastklasse läßt sich der Ursachen-Wirkungszusammenhang nicht deutlich trennen, d. h. es wird nicht klar, ob der Reibwert oder die in den Offsetdruck eingehenden Kräfte für eine zu lange oder zu kurze Gleitzeit verantwortlich sind. Daher erfolgt in dieser Lastklasse keine Adaption.

Die Klassifikation erfolgt ereignisgesteuert beim Übergang in die Gleitphase 5, wobei die Klassifikation für alle Kupplungen gleich ist und nicht schaltungsabhängig, sondern kupplungsabhängig erfolgt.

Die Adaption ermittelt aus dem zusätzlichen Moment M_Regel der Regelung und einer nach Lastklassen unterschiedenen Schaltungsart die Adaptionsrichtung in einem Modul 32, welches in Fig. 5 symbolisch dargestellt ist. In einem nachfolgenden Modul 33 erfolgt dann eine Korrekturfaktorenermittlung in Abhängigkeit der Adaptionsrichtung und der zu adaptierenden Kupplung K1 bzw. K2.

Die Adaption unterscheidet dabei zwischen zu- und abschaltender Kupplung und ermittelt pro Kupplung vier Korrekturwerte, nämlich jeweils einen Druck- und Momentenkorrekturfaktor für das Zu- und Abschalten. Dies läßt sich darin begründen, daß der Übergang der Kupplungen K1, K2 vom Haften ins Gleiten und umgekehrt aufgrund von Reibwertunterschieden etc. nicht gleich ist.

In Abhängigkeit von der ermittelten Adaptionsrichtung und der Lastklasse modifiziert die Adaption also die Momenten- bzw. Offsetdruckkorrekturfaktoren um die Schrittweite Momentenfaktoradaption bzw. Offsetdruckfaktoradaption. Die Adaption endet, wenn ein maximaler Adaptionsfaktor oder ein minimaler Reglereingriff erreicht ist.

Im Vergleich zu bekannten Systemen, bei denen jede Schaltung in verschiedene Lastklassen aufgeteilt ist und eine Adaption nur bei einigen Schaltungsarten wie der Zughochschaltung und der Schubrückschaltung möglich ist, wobei zudem ein hoher Ressourcenbedarf besteht, da für jede Schaltung und Lastklasse Adaptions- und Korrekturfaktoren abgespeichert und berechnet werden, bietet die erfindungsgemäße Adaption bedeutende Vorteile. So erfolgt in vorteilhafter Weise die Klassifizierung für alle Schaltungen gleich, wobei nur ein geringer Softwareaufwand erforderlich ist. Neben dem geringen Ressourcenbedarf ist auch nur ein minimaler EEPROM-Aufwand, nämlich für vier Werte pro Kupplung, nötig.

Da ein eindeutiger Wirkungs-Ursachenzusammenhang durch Adaption und Regelung des Moment-Druck-Zusammenhangs besteht, sind auch keine Falschreaktionen möglich.

Die erfindungsgemäße Adaption ist bei allen Schaltungsarten anwendbar, wobei ein Satz Reglerparameter für alle Schaltungen gültig ist, und stellt ein modellbasiertes Verfahren dar, das ein manuelles Abstimmen nachbildet und den physikalischen Hintergrund berücksichtigt. Zudem ist die Adaption ein dynamisches Verfahren, da während der Schaltung die Auswahl und der Übergang der zu regelnden bzw. zu adaptierenden Kupplung automatisch und kontinuierlich erfolgt.

Die Regelung wie auch die Adaption kann bei konventionellen Lastschaltungen, d. h. Schaltungen in einem Getriebeteil, welche auch als Einfach-Kupplungswechsel bezeichnet werden, Anwendung finden.

Darüber hinaus können sie auch bei einer Gruppenwechsellastschaltung in einem Gruppengetriebe, wie sie z. B. in der EP 0 770 195 B1 beschrieben ist, durchgeführt werden. Hier ist dann zu beachten, daß die Regelung und Adaption vorzugsweise nur in dem Hauptgetriebe des Gruppengetriebes aktivierbar ist und einsetzt, wenn eine Splitterschaltung abgeschlossen ist und sich die Gruppe in der Gleitphase oder in der Gradient-Abbauphase befindet.

Bezugszeichen

1    Schnellfüllphase
2    Füllausgleichsphase
3    Lastübernahmephase
4    Gradient-Einstellphase

| 5 | Gleitphase |
|---|---|
| 6 | Gradient-Abbauphase |
| 7 | Schließphase |
| 8 | Motorkennfeld |
| 9 | Funktionsblock Ermittlung des Wandlungsverhältnisses μ |
| 10 | Kennfeld |
| 11 | Regelung |
| 12 | Summationspunkt |
| 13 | Korrekturlinien |
| 14 | Korrekturlinien |
| 15 | Zeit-Begrenzer |
| 16 | Summationspunkt |
| 17 | zeitgesteuerte Druckrampen |
| 18 | Regler |
| 19 | Sollwertmanagement |
| 20 | Sollwertermittlung |
| 21 | Sollwertaufbereitung |
| 22 | Sollwertaufschaltung |
| 23 | Meßwertaufbereitung |
| 24 | Korrekturglied |
| 25 | Funktionsblock meßbare Störgrößen |
| 26 | Störgrößenaufschaltung |
| 27 | Regelstrecke |
| 28 | Funktionsblock nichtmeßbare Störgrößen |
| 29 | Stellglied |
| 30 | Messung der Getriebeeingangsdrehzahl |
| 31 | Funktionsblock Ermittlung des Belastungszustandes |

**Patentansprüche**

1. Verfahren zum Steuern von Lastschaltungen eines Automatgetriebes, insbesondere eines Kraftfahrzeuges, bei dem ein elektronisches Steuergerät über elektrohydraulische Einrichtungen den Druckverlauf einer ersten, öffnenden Kupplung (K1) und einer zweiten, schließenden Kupplung (K2) während eines Schaltvorgangs derart steuert, daß in einer ersten Schaltungsart, welche eine Zug-Hochschaltung bzw. eine Schub-Rückschaltung ist, und in einer zweiten Schaltungsart, welche eine Zug-Rückschaltung bzw. eine Schub-Hochschaltung ist, jeweils auf eine Schnellfüllphase (1) eine Füllausgleichsphase (2) folgt, an die sich eine Lastübernahmephase (3) und Schließphase (7) anschließt, wobei in der ersten Schaltungsart der Lastübernahmephase (3) eine Gradient-Einstellphase (4) mit Gleitphase (5) folgt und vor der Schließphase (7) eine Gradient-Abbauphase (6) kommt, und in der zweiten Schaltungsart der Füllausgleichsphase (2) eine Gradient-Einstellphase (4) mit Gleitphase (5) folgt und vor der Lastübernahmephase eine Gradient-Abbauphase (6) kommt, und wobei der notwendige Druck der Kupplungen (K1, K2) aus einem statischen Motormoment (M_Last), einem dynamischen Moment (M_Dyn) und getriebespezifischen Parametern berechnet wird, **dadurch gekennzeichnet, daß** bei der Berechnung (pK) des Druckes der Kupplungen (K1, K2) zusätzlich ein eine Regelgröße darstellendes Moment (M_Regel) eingeht, dessen Wert in einer Getriebetoleranzen erfassenden Regelung (11) derart bestimmt wird, daß eine Soll-Gleitzeit der Kupplungen (K1, K2) wenigstens annähernd eingehalten wird.

2. Verfahren nach Anspruch 1, **dadurch gekennzeichnet, daß** zur Ermittlung des zusätzlichen Moments (M_Regel) bei der Regelung (11) eine IstDrehzahl-änderung einer Getriebeeingangsdrehzahl (n_T) eines im Automatgetriebe enthaltenen hydrodynamischen Drehmomentwandlers während einer Schaltung ermittelt und mit einer Soll-Drehzahländerung verglichen wird, wobei aus der Differenz zwischen Soll- und Istdrehzahländerung das zusätzliche aufgrund der Regelung aufzubringende Moment (M_Regel) derart errechnet wird, daß die Differenz zwischen Soll- und Istdrehzahländerung wenigstens minimiert wird.

3. Verfahren nach Anspruch 2, **dadurch gekennzeichnet, daß** die Soll-Drehzahländerung der Getriebeeingangsdrehzahl (n_T) in einer Sollwertermittlung (20) und einer vorzugsweise vorgesehenen nachgeschalteten Sollwertaufbereitung (21) einer elektronischen Getriebesteuerung aus dem Quotienten des dynamischen Moments (M_Dyn) bezogen auf eine getriebeeingangsseitig bezogenen Schwungmasse eine Soll-Drehzahländerung errechnet wird.

4. Verfahren nach Anspruch 2 oder 3, **dadurch gekennzeichnet, daß** bei aktivierter Regelung (11) die Soll-Drehzahländerung zur Kompensation einer hydraulischen Verzögerung und/oder einer Filterung mittels einer Sollwertaufschaltung (22), vorzugsweise über zwei hintereinandergeschaltete PT1-Glieder, verzögert ausgegeben wird.

5. Verfahren nach einem der Ansprüche 2 bis 4, **dadurch gekennzeichnet, daß** die Ist-Drehzahländerung aus der Getriebeeingangsdrehzahländerung und/oder einer Abtriebsdrehzahländerung ermittelt wird, wobei die Ist-Drehzahländerung der Getriebeeingangsdrehzahl (n_T) vorzugsweise durch numerische Differentiation der Getriebeeingangsdrehzahl (n_T) ermittelt wird.

6. Verfahren nach einem der Ansprüche 2 bis 5, **dadurch gekennzeichnet, daß** die Bestimmung der Ist-Drehzahländerung der Getriebeeingangsdrehzahl (n_T) mit Beginn der Gleitphase (5) startet und mit dem Verlassen der Gradient-Abbauphase (6) endet, wobei die Ist-Drehzahländerung vorzugsweise gefiltert wird mittels eines Filters, der zum Beginn der Gleitphase (5) auf die aktuelle Getriebeeingangsdrehzahl (n_T) initialisiert wird.

7. Verfahren nach einem der Ansprüche 1 bis 6, **dadurch gekennzeichnet, daß** ein Regler (18) der Regelung (11) als Ausgangsgröße einen Korrekturgradient zum Angleich von Soll- und Istwert ausgibt, welcher als Produkt mit dem getriebeeingangsseitigen Massenträgheitsmoment das Moment (M_Regel) der Regelung (11) ergibt.

8. Verfahren nach einem der Ansprüche 1 bis 7, **dadurch gekennzeichnet, daß** der Regelkreis an Änderungen des zur Berechnung des zusätzlichen Moments (M_Regel) verwendeten Massenträgheitsmomentes angepaßt wird.

9. Verfahren nach einem der Ansprüche 1 bis 8, **dadurch gekennzeichnet, daß** die Regelung (11) bei allen Schaltungsarten zugeschaltet ist, wobei die Regelung (11) jeweils nur in einer Phase (5, 6) der Kupplungen (K1, K2) zugeschaltet ist, in denen diese gleiten, insbesondere während der Gleitphase (5) und der Gradient-Abbauphase (6) der Kupplungen (K1, K2).

10. Verfahren nach einem der Ansprüche 1 bis 9, **dadurch gekennzeichnet, daß** das dynamische Moment (M_Dyn) eine Funktion der Sollschaltzeit, der getriebeeingangsseitig bezogenen Schwungmasse und einer zu überwindenden Differenzdrehzahl ist, wobei die Differenzdrehzahl sich aus dem Verhältnis der ersten und zweiten Übersetzung mal der Getriebeausgangsdrehzahl errechnet, und daß das statische Moment (M_Last) eine Funktion des aktuellen, von der Brennkraftmaschine abgegebenen Moments (M_Mot) mal einem Wandlungsverhältnis (μ) des Drehmomentwandler ist

11. Verfahren nach einem der Ansprüche 1 bis 10, **dadurch gekennzeichnet, daß** in der ersten Schaltungsart während der Schnellfüllphase (1) die zweite Kupplung (K2) mit hohem Druck beaufschlagt und der Druck der ersten Kupplung (K1) von einem ersten auf ein zweites Niveau abgesenkt wird, welches oberhalb der Rutschgrenze der ersten Kupplung (K1) liegt, daß in der Füllausgleichsphase (2) die zweite Kupplung (K2) auf einem niederen Druckniveau (pF) befüllt wird und der Druck der ersten Kupplung (K1) auf dem zweiten Niveau verbleibt, daß in der Lastübernahmephase (3) der Druck der zweiten Kupplung (K2) auf einen von einer ersten Kenngröße (KG1) abhängigen Endwert (pE1) erhöht wird und der Druck der ersten Kupplung (K1) vom zweiten Niveau auf Null abgesenkt wird, daß in der Gradient-Einstellphase (4) der Druck der zweiten Kupplung (K2) von dem von der ersten Kenngröße (KG1) abhängigen Endwert (pE1) auf einen von einer zweiten Kenngröße (KG2) abhängigen Endwert (pE2) erhöht wird, daß in der Gleitphase (5) der Druck der zweiten Kupplung (K2) linear erhöht wird, bis an dieser ein Vorsynchronpunkt erkannt wird, daß in der Gradient-Abbauphase (6) der Druck der zweiten Kupplung (K2) auf einen von einer dritten Kenngröße (KG3) abhängigen Endwert (pE3) verringert wird, und daß mit Erreichen dieses Endwertes (pE3) die Schließphase (7) beginnt.

12. Verfahren nach einem der Ansprüche 1 bis 11, **dadurch gekennzeichnet, daß** in der zweiten Schaltungsart während der Schnellfüllphase (1) die zweite Kupplung (K2) mit hohem Druck beaufschlagt und der Druck der ersten Kupplung (K1) von einem ersten auf ein zweites Niveau abgesenkt wird, welches oberhalb der Rutschgrenze der ersten Kupplung (K1) liegt, daß in der Füllausgleichsphase (2) die zweite Kupplung (K2) auf einem niederen Druckniveau (pF) befüllt wird und der Druck der ersten Kupplung (K1) auf dem zweiten Niveau verbleibt, daß in der Gradient-Einstellphase (4) der Druck der ersten Kupplung (K1) auf einen von der zweiten Kenngröße (KG2) abhängigen Endwert verringert wird, daß in der Gleitphase (5) der Druck der ersten Kupplung (K1) rampenförmig erhöht wird, bis an dieser ein Vorsynchronpunkt erkannt wird, daß in der Gradient-Abbauphase (6) der Druck der ersten Kupplung (K1) vom Rampenendwert auf einen von der ersten Kenngröße (KG1) abhängigen Endwert erhöht wird, daß in der Lastübernahmephase der Druck der ersten Kupplung (K1) auf Null reduziert und der Druck der zweiten Kupplung (12) von Fülldruck (pF) auf den von der ersten Kenngröße (KG1) abhängigen Endwert erhöht wird, und daß mit Erreichen dieses Endwertes die Schließphase (7) beginnt.

**13.** Verfahren nach einem der Ansprüche 11 oder 12, **dadurch gekennzeichnet, daß** die erste Kenngröße (KG1) festgelegt wird aus dem statischen Moment (M_Last), die zweite Kenngröße (KG2) berechnet wird aus der Summe des aktuellen, vorzeichenrichtigen statischen Moments (M_Last), des dynamischen Moments (M_Dyn) und des zusätzlichen Moments (M_Regel) aus der Regelung (11), wobei die Summe vorzugsweise mit einem Faktor (F1) gewichtet und dem Ergebnis eine Konstante (F2) hinzuaddiert wird.

**14.** Verfahren nach einem der Ansprüche 11 bis 13, **dadurch gekennzeichnet, daß** der Vorsynchronpunkt bestimmt wird aus einem Gradienten der Differenzdrehzahl ($\Delta$n) der zweiten Kupplung (K2), dem aktuellen Wert der Differenzdrehzahl ($\Delta$n) der zweiten Kupplung (K2) und einer ersten Zeitstufe.

**15.** Verfahren nach einem der Ansprüche 11 bis 14, **dadurch gekennzeichnet, daß** die dritte Kenngröße (KG3) festgelegt ist durch eine zweite Zeitstufe für den Übergang vom Gradienten der Differenzdrehzahl ($\Delta$n) am Vorsynchronpunkt zum Gradienten der Differenzdrehzahl am Synchronpunkt, wobei der Gradient der Differenzdrehzahl und die Differenzdrehzahl ($\Delta$n) am Synchronpunkt wenigstens annähernd Null sind.

**16.** Verfahren nach einem der Ansprüche 11 bis 15, **dadurch gekennzeichnet, daß** innerhalb der Schließphase (7) der Druck an der zweiten Kupplung (K2) rampenförmig erhöht wird, bis der Absolutwert der Differenzdrehzahl ($\Delta$n) der zweiten Kupplung (K2) innerhalb einer dritten Zeitstufe kleiner einem Sollwert ist und anschließend die zweite Kupplung (K2) mit Hauptdruck beaufschlagt wird.

**17.** Verfahren nach einem der Ansprüche 1 bis 16, **dadurch gekennzeichnet, daß** eine Zug-/Schub-Unterscheidung aufgrund des Vorzeichens der Summe aus aktuellem statischen Moment (M_Last), aktuellem dynamischen Moment (M_Dyn) und dem Moment (M_Regel) aufgrund der Regelung (11) erfolgt.

**18.** Verfahren nach einem der Ansprüche 1 bis 17, **dadurch gekennzeichnet, daß** die während der Regelung (11) gewonnen Daten einer Adaption zugeführt werden, so daß der Anteil des zusätzlichen Momentes (M_Regel) aufgrund der Regelung (11) in nachfolgenden Schaltungen im gleichen Betriebszustand abnimmt.

**19.** Verfahren nach Anspruch 18, **dadurch gekennzeichnet, daß** die Adaption über eine Kupplungskonstante einen Moment-Druck-Zusammenhang zwischen dem Kupplungsdruck (pK) und einem Schaltmoment (M_Schalt) korrigiert, wobei die Kupplungskonstante in Abhängigkeit von Reibgrößen vorgegeben wird und multipliziert mit dem Schaltmoment (M_Schalt) und einem Momentenfaktor einen Summanden ergibt, der in Addition mit einem Offsetdruck den Kupplungsdruck (pK) bildet.

**20.** Verfahren nach einem der Ansprüche 18 oder 19, **dadurch gekennzeichnet, daß** die Adaptionsgröße in Abhängigkeit einer Lastklasse der Schaltung gewählt wird, wobei bei niedriger Lastklasse eine Offsetdruckadaption und bei hoher Lastklasse ein Reibwertadaption durchgeführt wird, und wobei die Lastklassen in Abhängigkeit der aktuellen Schaltphase und des Kupplungsdruckes vordefiniert sind.

**21.** Verfahren nach einem der Ansprüche 18 bis 20, **dadurch gekennzeichnet, daß** die Adaptionsrichtung aus dem zusätzlichen Moment M_Regel der Regelung und einer nach Lastklassen unterschiedenen Schaltungsart ermittelt wird.

**22.** Verfahren nach einem der Ansprüche 18 bis 21, **dadurch gekennzeichnet, daß** eine Korrekturfaktorermittlung in Abhängigkeit der Adaptionsrichtung und der zu adaptierenden Kupplung (K1, K2) erfolgt.

**23.** Verfahren nach einem der Ansprüche 18 bis 22, **dadurch gekennzeichnet, daß** die Adaption beendet wird, wenn ein maximaler Adaptionsfaktor oder ein minimaler Reglereingriff erreicht ist.

**24.** Verfahren nach einem der Ansprüche 1 bis 23, **dadurch gekennzeichnet, daß** die Regelung und Adaption bei Anwendung in einem Gruppengetriebe nur in dessen Hauptgetriebe aktivierbar ist.

**Claims**

1. Method for controlling the powershifts of an automatic transmission, especially one of a motor vehicle, in which, via electrohydraulic systems, an electronic control unit controls the pressure patterns of an opening clutch (K1) and of a closing clutch (K2) during a shifting process in such a manner that in a first shifting mode, which is a pull-upshift or a thrust-downshift, and in a second shifting mode, which is a pull-downshift or a thrust-upshift, each quick-fill phase (1) is followed by a fill-compensating phase (2), which is followed by a load-takeover phase (3) and a closing phase (7); with the load-takeover phase (3) in the first shifting mode being followed by a gradient-setting phase (4) with sliding phase (5), and the closing phase (7) being preceded by a gradient-decreasing phase (6); and with the fill-compensating phase (2) in the second shifting mode being followed by a gradient-setting phase (4) with sliding phase (5), and the load-takeover phase being preceded by a gradient-decreasing phase (6); and with the required pressure of the clutches (K1, K2) being calculated on the basis of a static engine torque (M_Last), a dynamic torque (M_Dyn), and transmission-specific parameters, **characterized in that** calculation (pK) of the pressure of the clutches (K1, K2) also includes a torque value (M_Regel), which represents a control variable whose value is determined by a control system (11), which records transmission tolerances, in such a way that a nominal sliding time of the clutches (K1, K2) is at least approximately observed.

2. Method according to claim 1, **characterized in that** for determining the additional torque (M_Regel) in the control system (11), the actual speed change of the transmission input speed (n_T) of a hydrodynamic torque converter contained in the automatic transmission is determined during a shift and compared with the desired speed change, with the additional torque (M_Regel) to be produced due to the control system being calculated on the basis of the difference between desired and actual speed change in such a manner that the difference between desired and actual speed change is at least minimized.

3. Method according to claim 2, **characterized in that** the desired speed change of the transmission input speed (n_T) is calculated through setpoint investigation (20) and subsequent setpoint processing (21) by an electronic control unit on the basis of the quotient of the dynamic torque (M_Dyn) referred to a flywheel mass on the input-end of the transmission.

4. Method according to claim 2 or 3, **characterized in that** with activated control system (11), issuance - preferably via two PT1-elements connected in series - of the desired speed change for compensating hydraulic delay and/or filtering is delayed by means of setpoint feedforward (22).

5. Method according to one of the claims 2 through 4, **characterized in that** the actual speed change is determined on the basis of the transmission input speed change and/or an output speed change, with the actual speed change of the transmission input speed (n_T) preferably being determined by numerical differentiation of the transmission input speed (n_T).

6. Method according to one of the claims 2 through 5, **characterized in that** determination of the actual speed change of the transmission input speed (n_T) starts with commencement of the sliding phase (5) and ends when the gradient-decreasing phase (6) ends, with the actual speed change preferably being filtered by means of a filter initialized at the start of the sliding phase (5) for the current transmission input speed (n_T).

7. Method according to one of the claims 1 through 6, **characterized in that** a controller (18) of the control system (11) issues a correction gradient for adjustment the desired and the actual value, which multiplied with the moment of inertia on the transmission input end results in the torque (M_Regel) of the control system (11).

8. Method according to one of the claims 1 through 7, **characterized in that** the control loop is adjusted to changes in the moment of inertia used to calculate the additional torque (M_Regel).

9. Method according to one of the claims 1 through 8, **characterized in that** the control system (11) is activated for all shifting modes, with the control system (11) in each case being activated only in the phases (5, 6) of the clutches (K1, K2) in which they slide, in particular during the sliding phase (5) and the gradient-decreasing phase (6) of the clutches (K1, K2).

10. Method according to one of the claims 1 through 9, **characterized in that** the dynamic torque (M_Dyn) is a function of the desired shifting time, the flywheel mass related the transmission input end, and a differential speed to be overcome, with the differential speed being determined on the basis of the ratio of the first and second ratios multiplied by the transmission output speed; and **in that** the static torque (M_Last) is a function of the current torque (M_Mot) produced by the combustion engine multiplied by a conversion ratio (μ) of the torque converter.

11. Method according to one of the claims 1 through 10, **characterized in that** in the first shifting mode during the quick-fill phase (1) the second clutch (K2) is activated by a high level of pressure and the pressure of the first clutch (K1) is reduced from a first to a second level, which is above the slipping limit of the first clutch (K1); that in the fill-compensation phase (2) the second clutch (K2) is filled at a low pressure level (pF) and the pressure of the first clutch (K1) remains at the second level; that in the load-takeover phase (3) the pressure of the second clutch (K2) is raised to an end value (pE1) depending on a first variable (KG1) and the pressure of the first clutch (K1) is lowered from the second level to zero; that in the gradient-setting phase (4) the pressure of the second clutch (K2) is raised from the end value (pE1) depending on the first variable (KG1) to an end value (pE2) depending on a second variable (KG2); that in the sliding phase (5) the pressure of the second clutch (K2) is raised in a linear manner until a pre-synchronous point is detected on it; that in the gradient-decreasing phase (6) the pressure of the second clutch (K2) is reduced to an end value (pE3) depending on a third variable (KG3); and that the closing phase (7) starts when this end value (pE3) is reached.

12. Method according to one of the claims 1 through 11, **characterized in that** in the second shifting mode during the quick-fill phase (1) the second clutch (K2) is activated by a high level of pressure and the pressure of the first clutch (K1) is reduced from a first to a second level, which is above the slipping limit of the first clutch (K1); that in the fill-compensating phase (2) the second clutch (K2) is filled at a low pressure level (pF) and the pressure of the first clutch (K1) remains at the second level; that in the gradient-setting phase (4) the pressure of the first clutch (K1) is reduced to an end value depending on the second variable (KG2); that in the sliding phase (5) the pressure of the first clutch (K1) is increased in a ramp-like manner until a pre-synchronous point is detected on it; that in the gradient-decreasing phase (6) the pressure of the first clutch (K1) is raised from the ramp end value to an end value depending on the first variable (KG1); that in the load-takeover phase the pressure of the first clutch (K1) is reduced to zero and the pressure of the second clutch (K2) is raised from the filling pressure (pF) to an end value depending on the first variable (KG1); and that the closing phase (7) starts when this end value is reached.

13. Method according to one of the claims 11 or 12, **characterized in that** the first variable (KG1) is determined on the basis of the statistical torque (M_Last), the second variable (KG2) is calculated on the basis of the sum of the current, correctly signed statistical torque (M_Last), the dynamic torque (M_Dyn), and the additional torque (M_Regel) of the control system (11), with the sum preferably being weighted with a factor (F1) and a constant (F2) being added to the result.

14. Method according to one of the claims 11 through 13, **characterized in that** the pre-synchronous point is determined on the basis of a gradient of the differential speed (Δn) of the second clutch (K2), the current value of the differential speed (Δn) of the second clutch (K2), and a first time stage.

15. Method according to one of the claims 11 through 14, **characterized in that** the third variable (KG3) is determined by a second time stage for the transition from the gradient of the differential speed (Δn) on the pre-synchronous point to the gradient of the differential speed on the synchronous point, with the gradient of the differential speed and the differential speed (Δn) on the synchronous point being at least approximately zero.

16. Method according to one of the claims 11 through 15, **characterized in that** within the closing phase (7) the pressure on the second clutch (K2) is raised in a ramp-like manner until the absolute value of the differential speed (Δn) of the second clutch (K2) within a third time stage is smaller than a desired value and subsequently the second clutch (K2) is actuated by the main pressure.

17. Method according to one of the claims 1 through 16, **characterized in that** a pull-thrust distinction takes place due to the sign of the sum of the current statistical torque (M_Last), the current dynamic torque (M_Dyn), and the torque (M_Regel) due to the control system (11).

18. Method according to one of the claims 1 through 17, **characterized in that** the data gathered by the control system (11) are adapted so that the share of the additional torque (M_Regel) due to the control system (11) decreases in subsequent shifts in the same operating condition.

19. Method according to claim 18, **characterized in that** adaptation via a clutch constant corrects a torque-pressure connection between the clutch pressure (pK) and a shifting torque (M_Schalt), with the clutch constant being specified relative to friction parameters, and multiplied by the shifting torque (M_Schalt) and a torque factor results in an addend, which added to an offset pressure results in the clutch pressure (pK).

20. Method according to one of the claims 18 or 19, **characterized** **in that** the adaptation parameter is selected in relation to a load class of a shift, with an offset pressure adaptation taking place for a low load class and a friction value adaptation taking place for a high load class; and with the load classes being pre-defmed in relation to the current shifting phase and the clutch pressure.

21. Method according to one of the claims 18 through 20, **characterized in that** the adaptation direction is determined on the basis of the additional torque (M_Regel) of the control system (11) and a shifting mode differentiated by load classes.

22. Method according to one of the claims 18 through 21, **characterized in that** a correction factor is determined in relation to the adaptation direction and the clutch to be adapted (K1, K2).

23. Method according to one of the claims 18 through 22, **characterized** **in that** adaptation is terminated when a maximum adaptation factor or minimum controller intervention is achieved.

24. Method according to one of the claims 1 through 23, **characterized in that** control and adaptation in an auxiliary-range transmission can only be activated in its main transmission.

**Revendications**

1. Méthode de commande de changements de vitesses sous charge d'une boîte de vitesses automatique, en particulier d'une boîte de vitesses automatique d'un véhicule automobile, selon laquelle un boîtier de commande électronique pilote, à l'aide d'équipements électro-hydrauliques, l'allure de la pression lors de l'ouverture d'un premier embrayage (K1) et lors de la fermeture d'un deuxième embrayage (K2) pendant un processus de changement de vitesses de manière à ce que dans un premier mode de changement de vitesses - celui-ci étant un passage montant en tirage ou un passage descendant en poussée - et dans un deuxième mode de changement de vitesses - celui-ci étant un passage descendant en tirage ou un passage montant en poussée - la phase de remplissage rapide (1) est toujours suivie d'une phase de compensation de remplissage (2), cette dernière étant puis suivie d'une phase de reprise de charge (3) et d'une phase de fermeture (7), sachant que dans le premier mode de changement de vitesses la phase de reprise de charge (3) est suivie d'une phase de réglage des gradients (4) avec phase de glissement (5) et sachant que la phase de fermeture (7) est précédée d'une phase de réduction des gradients (6), et sachant que dans le deuxième mode de changement de vitesses la phase de compensation de remplissage (2) est suivie d'une phase de réglage des gradients (4) avec phase de glissement (5) et sachant que la phase de reprise de charge est précédée d'une phase de réduction des gradients (6), et sachant que la pression nécessaire des embrayages (K1, K2) est calculée à partir d'un couple moteur statique (M_Last), d'un couple dynamique (M_Dyn) et de paramètres spécifiques à la boîte der vitesses, **caractérisée en ce que** lors du calcul de la pression des embrayages (K1, K2) est, en plus, pris en considération un couple représentant une grandeur réglée (M_Regel), dont la valeur est déterminée dans un système de réglage (11) enregistrant des tolérances de la boîte de vitesses de façon à ce qu'un temps de glissement nominal des embrayages (K1, K2) soit, au moins approximativement, respecté.

2. Méthode selon la revendication 1, **caractérisée en ce que** pour la détermination du couple supplémentaire (M_Regel) dans le système de réglage (11) est déterminée une variation de régime effectif à partir d'un régime d'entrée de boîte de vitesses (n_T) d'un convertisseur de couple hydrodynamique monté dans la boîte de vitesses automatique pendant un changement de vitesse et **en ce qu'**il est comparé à une variation de régime théorique, sachant que le couple supplémentaire (M_Regel) à produire en raison du réglage est calculé à partir de la différence entre la variation de régime théorique et la variation de régime effectif de façon à ce que la différence entre la variation de régime théorique et la variation de régime effectif est au moins minimisée.

3. Méthode selon la revendication 2, **caractérisée en ce que** la variation de régime théorique du régime d'entrée de la boîte de vitesses (n_T) est calculée - dans le cadre d'une détermination de la valeur théorique (20) et d'un traitement de la valeur théorique (21) prévu de préférence en aval d'un boîtier de commande électronique d'une boîte de vitesses - à partir du quotient du couple dynamique (M_Dyn) et par rapport à une masse d'inertie spécifique au côté entrée de la boîte de vitesses.

**4.** Méthode selon les revendications 2 ou 3, **caractérisée en ce que**, le système de réglage (11) étant activé, l'affichage de la variation de régime théorique nécessaire pour la compensation d'une temporisation hydraulique et/ou d'un filtrage au moyen d'un traitement de la valeur théorique (22) est réalisé de façon retardée, de préférence par l'intermédiaire de deux éléments fonctionnels PT1.

**5.** Méthode selon une des revendications 2 à 4, **caractérisée en ce que** la variation de régime effectif est déterminée à partir de la variation de régime d'entrée de la boîte de vitesses et/ou à partir d'une variation de régime de sortie, sachant que la variation de régime effectif du régime d'entrée de la boîte de vitesses (n_T) est déterminée de préférence par différenciation numérique du régime d'entrée de boîte de vitesses (n_T).

**6.** Méthode selon une des revendications 2 à 5, **caractérisée en ce que** la détermination de la variation de régime effectif du régime d'entrée de la boîte de vitesses (n_T) commence au début de la phase de glissement (5) et **en ce qu'**elle se termine lorsque la phase de réduction des gradients (6) est quittée, sachant que la variation de régime effectif est de préférence filtrée à l'aide d'un filtre qui est initialisé au début de la phase de glissement (5) sur le régime d'entrée actuel de la boîte de vitesses (n_T).

**7.** Méthode selon une des revendications 1 à 6, **caractérisée en ce qu'**un régulateur (18) du système de réglage (11) affiche, en tant que grandeur de sortie, un gradient de correction pour la compensation de la valeur théorique et de la valeur effective et qui, multiplié avec le couple d'inertie côté entrée de la boîte de vitesses, donne le couple (M_Regel) du système de réglage (11).

**8.** Méthode selon une des revendication 1 à 7, **caractérisée en ce que** la boucle d'asservissement est adaptée à des modifications du couple d'inertie de masse utilisé pour le calcul du couple supplémentaire (M_Regel).

**9.** Méthode selon une des revendications 1 à 8, **caractérisée en ce que** le système de réglage (11) est activé pour tous les types de changements de vitesses, sachant que lors de chaque changement de vitesse le système de réglage (11) n'est activé que dans une seule phase (5, 6) des embrayages (K1, K2) dans laquelle ceux-ci glissent, en particulier lors de la phase de glissement (5) et la phase de réduction des gradients (6) des embrayages (K1, K2).

**10.** Méthode selon une des revendications 1 à 9, **caractérisée en ce que** le couple dynamique (M_Dyn) est une fonction du temps de changement de vitesse théorique, de la masse d'inertie spécifique au côté entrée de la boîte de vitesses et d'un régime différentiel à surmonter, sachant que le régime différentiel est calculé à partir du rapport entre le premier et le deuxième rapports de démultiplication multiplié par le régime de sortie de la boîte de vitesses, et que le couple statique (M_Last) est une fonction du couple actuel produit par le moteur à combustion interne (M_Mot) multiplié par le rapport de conversion (μ) du convertisseur de couple.

**11.** Méthode selon une des revendications 1 à 10, **caractérisée en ce que** dans le premier mode de changement de vitesses, pendant la phase de remplissage rapide (1), le deuxième embrayage (K2) est alimenté avec une pression élevée et **en ce que** la pression du premier embrayage (K1) est réduite d'un premier niveau à un deuxième niveau, ce dernier étant au-dessus du seuil de glissement du premier embrayage (K1), **en ce que** dans phase de compensation de remplissage (2) le deuxième embrayage (K2) est rempli à un niveau de pression inférieur (pF), la pression du premier embrayage (K1) restant au deuxième niveau, **en ce que** dans la phase de reprise de charge (3) la pression du deuxième embrayage (K2) est augmentée à une valeur finale (pE1) dépendante du premier paramètre (KG1) et **en ce que** la pression du premier embrayage (K1) est abaissée à partir du deuxième niveau à zéro, **en ce que** dans la phase de réglage des gradients (4) la pression du deuxième embrayage (K2) est augmentée à partir de la valeur finale (pE1) dépendante du premier paramètre (KG1) à une valeur finale (pE2) dépendante du deuxième paramètre (KG2), **en ce que** dans la phase de glissement (5) la pression du deuxième embrayage (K2) est augmentée linéairement jusqu'à ce que sur cet embrayage est détecté un point de présynchronisation, **en ce que** dans la phase de réduction des gradients (6) la pression du deuxième embrayage (K2) est abaissée à une valeur finale (pE3) dépendante d'un troisième paramètre (KG3) et **en ce que** la phase de fermeture (7) commence dès que cette valeur finale (pE3) est atteinte.

**12.** Méthode selon une des revendications 1 à 11, **caractérisée en ce que** dans le deuxième mode de changement de vitesses, pendant la phase de remplissage rapide (1), le deuxième embrayage (K2) est alimenté avec une pression élevée et **en ce que** la pression du premier embrayage (K1) est réduite d'un premier niveau à un deuxième niveau, ce dernier étant au-dessus du seuil de glissement du premier embrayage (K1), **en ce que** dans phase de compensation de remplissage (2) le deuxième embrayage (K2) est rempli à un niveau de pression inférieur (pF), la pression du premier embrayage (K1) restant au deuxième niveau, **en ce que** dans la phase de réglage des gradients (4) la pression du premier embrayage (K1) est réduite à une valeur finale dépendante du deuxième paramètre (KG2), **en ce que** dans la phase de glissement (5) la pression du premier embrayage (K1) est augmentée sous la forme d'une rampe jusqu'à ce que sur cet embrayage est détecté un point de présynchronisation, **en ce que** dans la phase de réduction des gradients (6) la pression du premier embrayage (K1) est augmentée à partir de la valeur de la rampe à une valeur finale dépendante du premier paramètre (KG1), **en ce que** dans la phase de reprise de charge la pression du premier embrayage (K1) est réduite à zéro et **en ce que** la pression du deuxième embrayage (K2) est augmentée à partir de la pression de remplissage (pF) jusqu'à la valeur finale dépendante du premier paramètre (KG1), et **en ce que** la phase de fermeture (7) commence dès que cette valeur fmale est atteinte.

**13.** Méthode selon une des revendications 12 ou 13, **caractérisée en ce que** le premier paramètre (KG1) est défini à partir du couple statique (M_Last), **en ce que** le deuxième paramètre (KG2) est calculé à partir de la somme du couple statique actuel et ayant le signe correct (M_Last), du couple dynamique (M_Dyn) et du couple supplémentaire (M_Regel) issus du système de réglage (11), sachant que la somme est pondérée de préférence avec un facteur (F1) et **en ce qu'**une constante (F2) est additionnée au résultat.

**14.** Méthode selon une des revendications 11 à 13, **caractérisée en ce que** le point de présynchronisation est déterminé à partir d'un gradient du régime différentiel ($\Delta$n) du deuxième embrayage (K2), de la valeur actuelle du régime différentiel ($\Delta$n) du deuxième embrayage (K2) et d'un premier étage de temporisation.

**15.** Méthode selon une des revendications 11 à 14, **caractérisée en ce que** le troisième paramètre (KG3) est défini par un deuxième étage de temporisation pour le passage du gradient du régime différentiel ($\Delta$n) au point de présynchronisation au gradient du régime différentiel au point de synchronisation, sachant que le gradient du régime différentiel et le régime différentiel ($\Delta$n) au point de synchronisation sont au moins approximativement zéro.

**16.** Méthode selon une des revendications 11 à 15, **caractérisée en ce que** dans la phase de fermeture (7) la pression au niveau du deuxième embrayage (K2) est augmentée sous forme d'une rampe jusqu'à ce que la valeur absolue du régime différentiel ($\Delta$n) du deuxième embrayage (K2) est, dans un troisième étage de temporisation, inférieure à une valeur théorique et **en ce que** ensuite le deuxième embrayage (K2) est alimenté avec la pression principale.

**17.** Méthode selon une des revendications 1 à 16, **caractérisée en ce que** est effectuée une différenciation entre « tirage » et « poussée » en raison du signe de la somme issue du couple statique actuel (M_Last), le couple dynamique actuel (M_Dyn) et le couple (M_Regel) en raison du système de réglage (11).

**18.** Méthode selon une des revendications 1 à 17, **caractérisée en ce que** les données enregistrées pendant le réglage (11) sont amenées vers un processus d'adaptation, de façon à ce que le pourcentage du couple supplémentaire (M_Regel) diminue en raison du réglage (11) dans les changements de vitesses successives dans le même état de fonctionnement.

**19.** Méthode selon la revendication 18, **caractérisée en ce que** l'adaptation par l'intermédiaire d'une constante d'embrayage a pour effet la correction d'une relation couple/pression entre la pression d'embrayage (pK) et un couple de changement de vitesse (M_Schalt), sachant que la constante d'embrayage est prédéterminée en fonction de paramètres de friction et dont résulte - à partir de la multiplication du couple de changement de vitesse (M_Schalt) et du facteur de couple - une cumulande, formant, lorsqu'elle est additionnée à une pression offset, la pression d'embrayage (pK).

**20.** Méthode selon une des revendications 18 ou 19, **caractérisée en ce que** le paramètre d'adaptation est sélectionné en fonction d'une classe de charge de changement de vitesses, sachant qu'en cas de classe de charge inférieure est effectuée une adaptation de pression offset et en cas de classe de charge élevée une adaptation du coefficient de friction, et sachant que les classes de charge sont prédéfinies en fonction de la phase de changement de vitesses actuelle et de la pression d'embrayage.

**21.** Méthode selon une des revendications 18 à 20, **caractérisée en ce que** le sens d'adaptation est déterminé à partir du couple supplémentaire M_Regel issu du système de réglage et à partir d'un mode de changement de vitesses différencié selon les classes de charge.

**22.** Méthode selon une des revendications 18 à 21, **caractérisée en ce qu'**une détermination du facteur de correction est effectuée en fonction du sens d'adaptation et de l'embrayage à adapter (K1, K2).

**23.** Méthode selon une des revendications 18 à 22, **caractérisée en ce que** l'adaptation est terminée dès qu'un facteur d'adaptation maximal ou une intervention minimale du régulateur est détectée.

**24.** Méthode selon une des revendications 1 à 23, **caractérisée en ce que** le réglage et l'adaptation, en cas d'application dans une boîte de vitesses dotée de groupe-relais / relais arrière, ne peuvent être activés que dans sa boîte principale.

Fig. 1

Fig. 2

EP 1 132 659 B1

Fig. 3

EP 1 132 659 B1

T_Gleit → **Sollwertermittlung** (20) → n_T_grad → **Sollwertaufbereitung** (21) → Sollgradient n_T

zu überwindende Drehzahldifferenz

**Fig. 4**

Schaltungsart, M_Regel → **Bestimmung Adaptionsrichtung** → Adaptionsrichtung → **Korrekturfaktorermittlung** (33)

Adaptionskupplung K1, K2

**Fig. 5**

Schaltphase → **Ermittlung des Betriebszustandes** (31) → Lastklasse

pK

**Fig. 6**